Europäisches Patentamt

European Patent Office

Office européen des brevets

(11) Veröffentlichungsnummer: **0 309 721 B1**

(12) **EUROPÄISCHE PATENTSCHRIFT**

(45) Veröffentlichungstag der Patentschrift: **03.11.93**

(51) Int. Cl.⁵: **G11B 13/04**, G11B 11/10

(21) Anmeldenummer: **88113491.0**

(22) Anmeldetag: **19.08.88**

(54) **Optischer Aufzeichnungsträger.**

(30) Priorität: 30.09.87 DE 3732875

(43) Veröffentlichungstag der Anmeldung:
**05.04.89 Patentblatt 89/14**

(45) Bekanntmachung des Hinweises auf die
Patenterteilung:
**03.11.93 Patentblatt 93/44**

(84) Benannte Vertragsstaaten:
**AT BE CH DE ES FR GB GR IT LI LU NL SE**

(56) Entgegenhaltungen:
EP-A- 0 178 423
FR-A- 2 578 083
US-A- 4 737 947

PATENT ABSTRACTS OF JAPAN, Band 11,
Nr. 253 (P-606)[2700], 18. August 1987, Seite
164 P 606; & JP-A-62 60 147

PATENT ABSTRACTS OF JAPAN, Band 7, Nr.
224 (P-227)[1369], 5. Oktober 1983, Seite 75 P
227; & JP-A-58 114 343

PATENT ABSTRACTS OF JAPAN, Band 8, Nr.
65 (P-263)[1502], 27. März 1984, Seite 24 P
263; & JP-A-58 211 346

(73) Patentinhaber: **Deutsche Thomson-Brandt
GmbH
Hermann-Schwer-Strasse 3
Postfach 1307
D-78003 Villingen-Schwenningen(DE)**

(72) Erfinder: **Morimoto, Yasuaki
Tallardstrasse 20
D-7730 Villingen-Schwenningen(DE)**
Erfinder: **Zucker, Friedhelm
Frankenstrasse 5
D-7730 Villingen-Schwenningen(DE)**
Erfinder: **Büchler, Christian
Keltenweg 3
D-7730 VS-Marbach(DE)**
Erfinder: **Schröder, Heinz-Jörg
Terra-Wohnpark 9
D-7730 VS-Marbach(DE)**

PATENT ABSTRACTS OF JAPAN, Band 10, Nr. 237 (P-487)[2293], 15. August 1986, Seite 99 P 487; & JP-A-61 68 742

PATENT ABSTRACTS OF JAPAN, Band 9, Nr. 97 (P-352)[1820], 26. April 1985; & JP-A-59 223 967

PATENT ABSTRACTS OF JAPAN, Band 6, Nr. 18 (P-100)[896], 2. Februar 1982; & JP-A-56 140 536

**Beschreibung**

Die Erfindung betrifft einen optischen Aufzeichnungsträger mit einer lichtdurchlässigen Substratschicht, ein Verfahren zum Lesen und ein Verfahren zur Herstellung eines derartigen optischen Aufzeichnungsträgers.

Ein bekannter derartiger Aufzeichnungsträger ist z.B. die CD-Platte, bei der auf die lichtdurchlässige Schicht eine lichtreflektierende Aluminiumschicht folgt, die Vertiefungen, sogenannte Pits, aufweist, welche die auf der CD-Platte gespeicherten Daten darstellen. Mittels einer optischen Abtastvorrichtung sind die Daten von der CD-Platte lesbar, weil das Reflexionsverhalten der lichtreflektierenden Aluminiumschicht von dem Muster abhängt, das die Vertiefungen auf der Platte bilden. Von einer Vertiefung, häufig auch groove genannt, wird infolge destruktiver Interferenzen weniger Licht reflektiert als von einem Hügel, der oft auch als land bezeichnet wird.

An der Intensität des von der CD-Platte reflektierten Lichts erkennt daher die optische Abtastvorrichtung, ob es sich bei dem abgetasteten Bit z.B. um eine logische Eins oder eine logische Null handelt.

Ein weiterer derartiger optischer Aufzeichnungsträger - unter der Bezeichnung magneto-optische Platte bekannt - ist in dem Aufsatz "Magneto-optische Versuche dauern an" in funkschau 13, 20. Juni 1986 auf Seite 37 - 41 beschrieben.

Im Gegensatz zu einer CD-Platte weist eine magneto-optische Platte keine Pits auf. Hinter der lichtdurchlässigen Schicht befindet sich eine magneto-optische Schicht, auf der Daten aufzeichenbar und von der die Daten lesbar sind. Es wird zunächst erläutert, wie die Daten auf eine magneto-optische Platte geschrieben werden.

Mittels eines auf die Platte fokussierten Laserstrahls wird die magneto-optische Schicht auf eine Temperatur erhitzt, die in der Nähe der Curie-Temperatur liegt. Meist genügt es, die magneto-optische Schicht nur etwa bis zur Kompensationstemperatur aufzuheizen, die unter der Curie-Temperatur liegt. Hinter dem Brennpunkt auf der Platte ist ein Elektromagnet angeordnet, der den vom Laserstrahl erhitzten Bereich in die eine oder andere Magnetisierungsrichtung magnetisiert. Weil nach Abschalten des Laserstrahls die erhitzte Stelle wieder unter die Kompensationstemperatur abkühlt, bleibt die vom Elektromagneten festgelegte Magnetisierungsrichtung erhalten; sie friert sozusagen ein. Auf diese Weise werden die einzelnen Bits in Domänen unterschiedlicher Magnetisierungsrichtung gespeichert. Dabei entspricht z.B. die eine Magnetisierungsrichtung einer Domäne einer logischen Eins, während die entgegengesetzte Magnetisierungsrichtung eine logische Null darstellt.

Zum Lesen der Daten macht man sich den Kerr-Effekt zunutze. Die Polarisationsebene eines linear polarisierten Lichtstrahls wird bei der Reflexion an einem magnetisierten Spiegel um einen meßbaren Winkel gedreht. Je nachdem, in welche Richtung der Spiegel magnetisiert ist, wird die Polarisationsebene des reflektierten Lichtstrahls nach rechts oder links gedreht. Weil aber die einzelnen Domänen auf der Platte wie magnetisierte Spiegel wirken, wird die Polarisationsebene eines abtastenden Lichtstrahls je nach der Magnetisierungsrichtung der gerade abgetasteten Domäne um einen meßbaren Winkel nach links oder rechts gedreht.

Aus der Drehung der Polarisationsebene des von der Platte reflektierten Lichtstrahls erkennt die optische Abtastvorrichtung, welches Bit vorliegt, eine logische Eins oder eine logische Null. Im Gegensatz zu einer CD-Platte mit Pits ist eine magneto-optische Platte nahezu beliebig oft lösch- und wieder beschreibbar.

Obwohl bei beiden optischen Aufzeichnungsträgern - CD-Platte und magneto-optische Platte - die Speicherkapazität und die Aufzeichnungsdichte erfreulich hoch liegen, ist eine wesentliche Vergrößerung der Speicherkapazität insbesondere bei der Anwendung für Computer und bei der Verwendung als Videoplatte wünschenswert und von großem Nutzen.

Aus der japanischen Patentanmeldung JP-A 62 60147 ist eine magneto-optische Platte bekannt, bei der auf den Datenspuren in vorgegebenen Abständen kurze Pitmuster vorgesehen sind, die Adressenmarkierungen enthalten. Diese Adressenmarkierungen dienen dazu, die auf der magneto-optischen Platte gespeicherten Daten in einzelne Abschnitte zu ordnen. Es liegen daher einerseits durch Magnetisieren und andererseits mittels Pits gespeicherte Daten in derselben Datenspur an den Stellen übereinander, wo die Adressenmarkierungen vorgesehen sind.

In der japanischen Patentanmeldung JP-A 58 114343 ist eine magneto-optische Platte beschrieben, die in mehrere Kreissektoren aufgeteilt ist. Die einzelnen Kreissektoren sind abwechselnd zur magneto-optischen Speicherung von Daten mit einer magneto-optischen Schicht und zur optischen Speicherung von Daten mit Pitmustern versehen, so daß auf einen magneto-optischen Sektor ein Sektor mit Pitmustern folgt.

Auf einer magneto-optischen Platte, die aus der japanischen Patentanmeldung JP-A 58 211346 bekannt ist, sind in Spurrichtung gesehen zwischen je zwei magneto-optischen Schichten Pitmuster vorgesehen, so daß beim Entlangfahren einer Datenspur jeweils auf eine magneto-optische Schicht ein Pitmuster folgt, an das sich wiederum eine magneto-optische Schicht anschließt etc. In den Pitmustern sind Spuradressen gespeichert.

Aus der JP-A 56 140 536 ist eine weitere optische Platte folgenden Aufbaus bekannt. Diese optische Platte ist aus einer optischen Schicht 1, die Pits enthält, und einer magnetischen Schicht 2 aufgebaut, an die sich eine Schutzschicht 3 anschließt. Zwei derartige Platten werden an den Schutzschichten aufeinander geklebt. Die in den Pits gespeicherten Daten werden optisch gelesen, dagegen werden die in der magnetischen Schicht gespeicherten Daten nicht Optisch sondern mittels eines Magnetkopfes gelesen.

Schließlich ist in der japanischen Patentanmeldung JP-A 61 68742 eine magneto-optische Platte beschrieben, auf der die Daten abwechselnd in spiral- oder kreisförmigen magneto-optischen Datenspuren und in Datenspuren mit Pitmustern gespeichert sind. Eine Windung der Spirale bzw. ein konzentrischer Kreis ist magneto-optisch, die nächste Windung bzw. der nächste Kreis dagegen mit Pitmustern versehen. Deshalb liegt zwischen zwei magneto-optischen Spiralwindungen bzw. Kreisen stets eine Spiralwindung bzw. ein Kreis mit Pits.

Bei keiner der aufgeführten magneto-optischen Platten wird aber durch die in den aufgezählten japanischen Patentanmeldungen vorgeschlagenen Maßnahmen die Speicherkapazität im Vergleich zu einer gewöhnlichen magneto-optischen oder einer optischen Platte erhöht.

Es ist daher Aufgabe der Erfindung, bei einem optischen Aufzeichnungsträger die Speicherkapazität wesentlich zu vergrößern.

Eine erste Lösung dieser Aufgabe besteht darin, daß auf die lichtdurchlässige Substratschicht eine teils lichtreflektiernde, teils lichtdurchlässige magneto-optische Schicht folgt, in der Daten durch Magnetisieren speicherbar sind, daß auf die magneto-optische Schicht eine erste lichtdurchlässige Schicht folgt, an die sich eine zweite lichtdurchlässige Schicht anschließt, in der Daten mittels Vertiefungen, sogenannter Pits, speicherbar sind, und daß die in der magneto-optischen Schicht gespeicherten Daten und die mittels der Pits gespeicherten Daten in derselben Datenspur übereinander liegen.

Eine zweite Lösung dieser Aufgabe sieht vor, daß auf die lichtdurchlässige Substratschicht eine teils lichtreflektiernde, teils lichtdurchlässige magneto-optische Schicht folgt, in der Daten durch Magnetisieren speicherbar sind, daß auf die magneto-optische Schicht eine lichtdurchlässige Schicht folgt, in der Daten mittels Vertiefungen, sogenannter Pits, speicherbar sind, daß die Pits an der Außenseite des Aufzeichnungsträgers vorgesehen sind, und daß die in der magneto-optischen Schicht gespeicherten Daten und die mittels der Pits gespeicherten Daten in derselben Datenspur übereinander liegen.

Ein erstes Verfahren zum Lesen eines optischen Aufzeichnungsträgers sieht vor, ein Teil des auf den Aufzeichnungsträger strahlenden und die Daten abtastenden Lichts von der magneto-optischen Schicht reflektiert, ein Teil aber durch die magneto-optische Schicht hindurchstrahlt, daß der reflektierte Teil des Lichts die magneto-optisch gespeicherten Daten enthält und daß der durch den Aufzeichnungsträger durchstrahlende Teil des Lichts die mittels der Pits gespeicherten Daten enthält.

Ein zweites Verfahren zum Lesen eines optischen Aufzeichnungsträgers sieht vor, ein Teil des auf den Aufzeichnungsträger strahlenden und die Daten abtastenden Lichts von der magneto-optischen Schicht reflektiert, ein Teil aber durch die magneto-optische Schicht hindurchstrahlt, daß der reflektierte Teil des Lichts die magneto-optisch gespeicherten Daten enthält, daß der durch den Aufzeichnungsträger durchstrahlende Teil des Lichts die mittels der Pits (3) gespeicherten Daten enthält und daß die Pits (3) an der Außenseite des Aufzeichnungsträgers vorgesehen sind.

Ein drittes Verfahren zum Lesen eines optischen Aufzeichnungsträgers sieht vor, daß ein Teil des auf den Aufzeichnungsträger strahlenden und die Daten abtastenden Lichts von der magneto-optischen Schicht reflektiert, ein Teil aber durch die magneto-optische Schicht hindurchstrahlt, daß der reflektierte Teil des Lichts die mittels der Pits gespeicherten Daten enthält und daß der durch den Aufzeichnungsträger durchstrahlende Teil des Lichts die magneto-optisch gespeicherten Daten enthält.

Ein Verfahren zur Herstellung eines optischen Aufzeichnungsträgers sieht vor, daß auf eine lichtdurchlässige Substratschicht eine magneto-optische Schicht aufgebracht wird, an die sich eine lichtdurchlässige Schicht anschließt, die von einem Photolack überzogen ist, auf dem durch Belichten das Pitmuster abgebildet wird, daß der Photolack entwikkelt wird, wobei die belichteten bzw. die nicht belichteten Stellen des Photolacks von der lichtdurchlässigen Schicht (10) gelöst werden, daß die frei liegenden Stellen der lichtdurchlässigen Schicht (10) weggeätzt werden und daß in einem letzten Verfahrensschritt der restliche Photolack (14) von der lichtdurchlässigen Schicht (10) gelöst wird.

Es zeigen

Figur 1     einen optischen Aufzeichnungsträger gemäß Anspruch 6 mit einem kreisförmigen Photodetektor

Figur 2     einen optischen Aufzeichnungsträger gemäß Anspruch 6 mit einem ringförmigen Photodetektor

Figur 3     einen optischen Aufzeichnungsträger gemäß Anspruch 7

Figur 4     einen optischen Aufzeichnungsträger gemäß Anspruch 3

Figur 5     einen optischen Aufzeichnungsträger gemäß Anspruch 2.

Der optische Aufzeichnungsträger gemäß Anspruch 1 stellt in der Ausführungsform als scheibenförmige Platte eine Kombination aus einer CD-Platte und einer magneto-optischen Platte dar. Weil einerseits Daten in den Pits gespeichert sind und andererseits durch Magnetisieren der magneto-optischen Schicht Daten nahezu beliebig oft speicherbar und löschbar sind, wird die Speicherkapazität bei der Erfindung verdoppelt.

Die Erfindung bietet weiter die Möglichkeit, mittels geeigneter optischer Abtastvorrichtungen gleichzeitig sowohl die in den Pits als auch in den magnetischen Domänen gespeicherten Daten zu lesen. Dadurch wird die Datenrate verdoppelt. Ebenso ist es möglich, in die Domänen neue Daten einzuschreiben, während gleichzeitig die in den Pits gespeicherten Daten gelesen werden.

Zum Einschreiben von Daten in die lichtreflektierende magneto-optische Schicht wird die Leistung eines z.B. als Lichtquelle vorgesehenen Lasers soweit erhöht, daß die Kompensationstemperatur im Brennfleck des Laserstrahls überschritten wird; dagegen ist die Leistung des Lasers beim Lesen von Daten soweit verringert, daß die Temperatur in der lichtreflektierenden magneto-optischen Schicht mit genügendem Sicherheitsabstand unter der Kompensationstemperatur liegt, um versehentliches Zerstören von Daten auszuschließen.

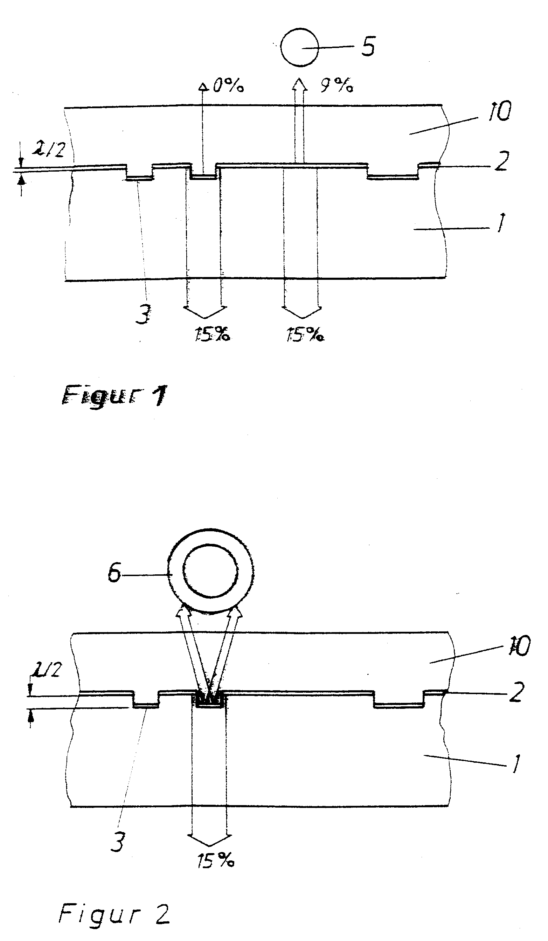

Wenn die magneto-optische Schicht 2 etwa gleich dick wie oder dünner als die Wellenlänge des abtastenden Lichts gewählt wird, strahlt ein Teil des Lichts durch. In Figur 1 ist gezeigt, daß bei einer $\lambda/2$ dünnen Schicht 2 an den Stellen, wo keine Vertiefungen sind, etwa 9 % des auftreffenden Lichts durchstrahlen, dagegen etwa 15 % reflektiert werden; der Rest wird absorbiert. Die magneto-optische Schicht 2 wird durch eine lichtdurchlässige Schicht 10, deren Brechungsindex $n_1 = 1$ beträgt, vor Beschädigungen geschützt.

In Figur 2 ist die Aufteilung des Lichtes an einem Pit 3, einer Vertiefung, dargestellt, deren Tiefe die Hälfte der Wellenlänge des abtastenden Lichts beträgt. Es werden wieder etwa 15 % des auftreffenden Lichtes reflektiert. Wegen der Pit-Tiefe von $\lambda/2$ entstehen jedoch hinter dem Aufzeichnungsträger Beugungsmuster, denn infolge des Gangunterschieds von $\lambda/2$ interferieren diejenigen Lichtanteile, die durch eine Vertiefung strahlen, mit denjenigen Lichtanteilen, die durch die dickere Schicht strahlen, welche die Vertiefung umgibt. Um die magneto-optische Schicht 2 vor Beschädigungen wie z.B. Kratzer zu schützen, ist eine lichtdurchlässige Schicht 10 mit einem Brechungsindex $n_1 = 1$ vorgesehen.

Weil wegen der Pit-Tiefe von $\lambda/2$ der Gangunterschied zwischen dem an einem Hügel und an einer Vertiefung reflektierten Licht $\lambda/2 + \lambda/2 = \lambda$ beträgt, wird das an der magneto-optischen Schicht 2 reflektierte Licht, das die magneto-optisch gespeicherten Daten abtastet, nicht durch das Pitmuster verfälscht. Anstelle von $\lambda/2$ kann die Pit-Tiefe auch ungeradzahlige Vielfache von $\lambda/2$ betragen. Es kommt nur darauf an, daß der Gangunterschied $\lambda$ oder ganzzahlige Vielfache von $\lambda$ beträgt.

Die Pits 3 lassen sich auf folgende drei Arten detektieren.

Mittels eines Photodetektors 5, der vorzugsweise wie in Figur 1 angedeutet kreisförmig ausgeführt ist, können Pits erkannt werden, weil ohne Pit etwa 9 % des Lichts auf den Photodetektor treffen, bei einem Pit wegen der Interferenzen dagegen im Idealfall überhaupt kein Licht auf den Photodetektor fällt.

Weil sich mittels eines ringförmigen Photodetektors, wie er in Figur 2 abgebildet ist, die Beugungsmaxima erster Ordnung bei einem Pit nachweisen lassen, können die mittels der Pits gespeicherten Daten gelesen werden. Im Idealfall strahlt ohne Pit kein Licht auf den ringförmigen Photodetektor, dagegen bilden sich hinter einem Pit die Beugungsmaxima erster Ordnung auf dem Photodetektor ab.

Schließlich ist es auch möglich, beide Photodetektoren derart miteinander zu kombinieren, daß der kreisförmige Photodetektor 5 vom ringförmigen Photodetektor 6 umgeben ist. Mit dem kreisförmigen Photodetektor 5 werden die nicht gebeugten Lichtstrahlen erfaßt, mit dem ringförmigen Photodetektor 6 dagegen die Beugungsstrahlen erster Ordnung detektiert. Weil die Signale der beiden Photodetektoren stets unterschiedliche Vorzeichen haben, liefert die Differenz der beiden Signale die mittels der Pits gespeicherten Daten.

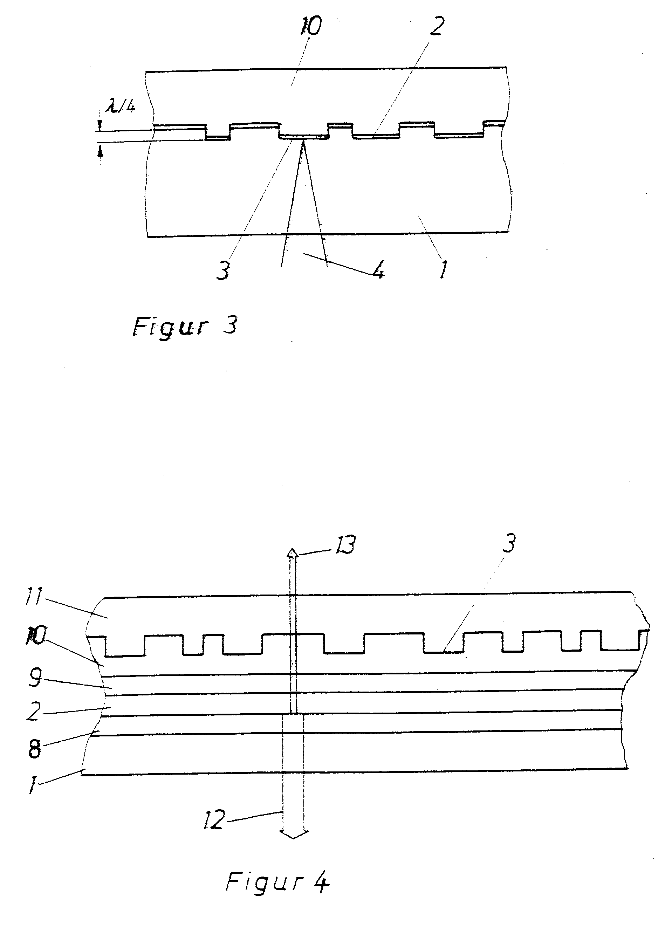

Bei dem in Figur 3 gezeigten optischen Aufzeichnungsträger ist die Pit-Tiefe zu $\lambda/4$ gewählt, so daß der Gangunterschied $\lambda/2$ beträgt. Anstelle von $\lambda/4$ kann die Pit-Tiefe auch ungeradzahlige Vielfache von $\lambda/4$ betragen. Entscheidend ist allein, daß der Gangunterschied zwischen dem an einem Pit und dem in seiner Umgebung reflektierten Licht $\lambda/2$ oder $\lambda/2 + n \cdot \lambda$ beträgt, wobei $n$ eine ganze Zahl ist.

Im Unterschied zum optischen Aufzeichnungsträger aus Figur 1 und 2 enthält das reflektierte Licht die mittels der Pits gespeicherten Daten, während im durchstrahlenden Licht die magnetisch gespeicherten Daten enthalten sind. Zum Lesen der magnetisch gespeicherten Daten nutzt man anstelle des Kerr-Effektes den ähnlichen Faraday-Effekt aus.

Es wird nun der Schichtaufbau des in Figur 4 gezeigten und im Anspruch 3 angegebenen optischen Aufzeichnungsträgers beschrieben und erläutert. Dieser Aufzeichnungsträger hat den folgenden Schichtaufbau.

Auf eine Substratschicht 1 folgt eine erste Schutzschicht 8, an die sich eine magneto-optische Schicht 2 anschließt, auf die eine zweite Schutzschicht 9 folgt. Auf die zweite Schutzschicht 9 folgen eine erste lichtdurchlässige Schicht 10 und eine zweite lichtdurchlässige Schicht 11, die Pits 3 aufweist. Der übersichtlichkeit wegen sind die Dikken der einzelnen Schichten jedoch nicht maßstabsgetreu gezeichnet.

Ein Teil 12 des in der Figur 4 von unten auf die Substratschicht 1 strahlenden Lichts 4 wird an der magneto-optischen Schicht 2 reflektiert, ein Teil 13 jedoch strahlt durch die magneto-optische Schicht 2 und durch die restlichen Schichten 9, 10 und 11 hindurch.

Das von der magneto-optischen Schicht 2 reflektierte Licht 12 enthält die in der magneto-optischen Schicht gespeicherten Daten, während das durch den Aufzeichnungsträger hindurchstrahlende Licht 13 die mittels der Pits 3 gespeicherten Daten enthält, wenn die Pit-Tiefe zu $\lambda/2$ oder ungeradzahlige Vielfache von $\lambda/2$ gewählt wird. Beträgt die Pit-Tiefe dagegen $\lambda/4$, so enthält das reflektierte Licht die mittels der Pits gespeicherten Daten, während das durchstrahlende Licht die in der magneto-optischen Schicht gespeicherten Daten enthält. Der Brechungsindex der Substratschicht 1 und der Schicht 11 ist z.B. zu $n_2 = 1,5$ gewählt, dagegen hat die lichtdurchlässige Schicht 10, die beispielsweise auch ein Hohlraum oder ein Luftpolster, ein sogenanntes air gap, sein kann, einen Brechungsindex von $n_1 = 1$.

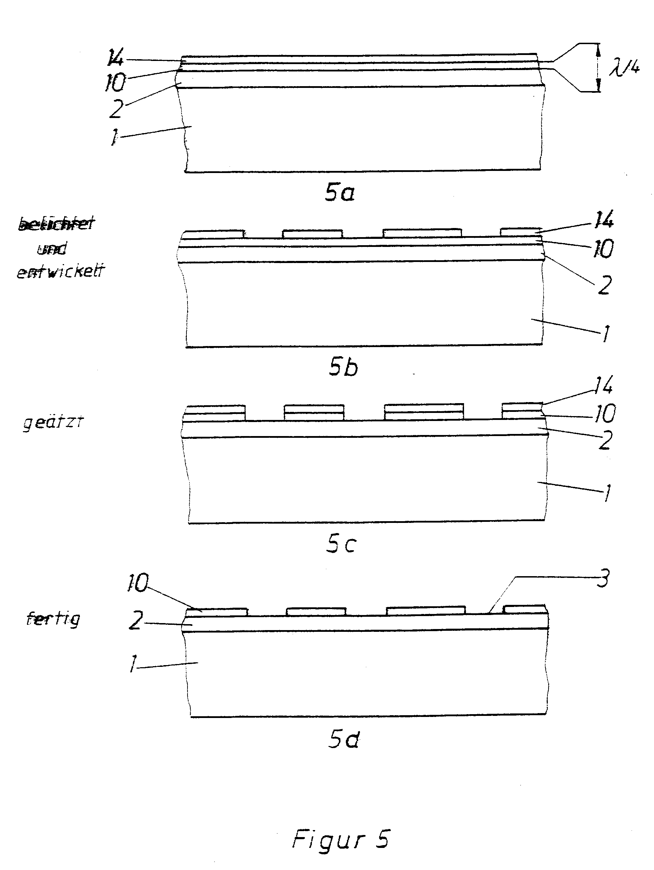

In der Figur 5d ist der Schichtaufbau des im Anspruch 3 angegebenen Aufzeichnungsträgers gezeigt.

Auf eine lichtdurchlässige Substratschicht 1 folgt eine magneto-optische Schicht 2, an die sich eine lichtdurchlässige Schicht 10 anschließt. Die an der Außenseite der lichtdurchlässigen Schicht 10 vorgesehenen Pits 3 haben eine Tiefe von $\lambda/4$. Weil die magneto-optische Schicht 2 einen Teil des auf sie strahlenden Lichts - etwa 15% - reflektiert, einen Teil - etwa 9% - aber auch durchläßt, können die Pits 3 auf dieselbe Weise wie bei den Aufzeichnungsträgern der Figuren 2, 3, 4 oder 6 aus dem durchstrahlenden Licht mittels eines kreis- oder ringförmigen Photodetektors oder einer Kombination aus beiden erkannt werden. Die magnetisch gespeicherten Daten sind im reflektierten Licht enthalten.

Dieses Ausführungsbeispiel läßt sich auf besonders einfache Weise herstellen, wie an Hand der Figuren 5a, 5b, 5c und 5d nun erläutert wird.

Bei der Herstellung wird von einer Platte ausgegangen, bei der, wie aus Figur 5a ersichtlich ist, auf die lichtdurchlässige Substratschicht 1 die magneto-optische Schicht 2 folgt, an die sich die lichtdurchlässige Schicht 10 anschließt, die von einem Photolack 14 bedeckt ist.

Das Pitmuster wird durch Belichten auf dem Photolack 14 abgebildet. Beim Entwickeln des Photolacks 14 werden die belichteten oder die nicht belichteten Stellen von der Schicht 10 gelöst, so daß an diesen Stellen die Schicht 10 frei liegt, wie in Figur 5b gezeigt ist. Anschließend werden die frei liegenden Stellen der lichtdurchlässigen Schicht 10 weggeätzt, so daß nur noch an den belichteten bzw. an den nicht belichteten Stellen der Photolack 14 und die lichtdurchlässige Schicht 10 auf der Platte vorhanden sind. Der soweit bearbeitete Aufzeichnungsträger ist in Figur 5c abgebildet.

In einem letzten Verfahrensschritt wird der restliche Photolack 14 von der lichtdurchlässigen Schicht 10 gelöst, so daß nur noch die Hügel, die sogenannten land-Anteile, übrig bleiben; bei den Pits liegt daher, wie in der Figur 7d zu sehen ist, die magneto-optische Schicht 2 frei.

Bei dem im Anspruch 9 beschriebenen Ausführungsbeispiel der Erfindung ist angegeben, daß die in der magneto-optischen Schicht gespeicherten Daten zu den mittels der Pits gespeicherten Daten korreliert sind.

Auf diese Weise können z.B. auf einer Videoplatte mittels der Pits Videosignale nach bekanntem Standard aufgezeichnet sein. Zusätzlich zu diesen in den Pitmustern gespeicherten Videosignalen können in der magneto-optischen Schicht korrelierte Daten gespeichert sein, die zusammen mit den im Pitmuster gespeicherten Daten ein Wiedergabesignal hoher Qualität ergeben, so daß eine verbesserte Bild- und Tonqualität die Folge ist. Beispielsweise kann das eine Halbbild im Pitmuster gespeichert sein, das andere dagegen in der magnetischen Schicht. Eine derartige Videoplatte läßt sich sowohl in einem herkömmlichen Videoplattenspieler als auch in einem Gerät mit High Definition-Qualität abspielen. Diese Videoplatte hat den großen Vorteil, daß sie bei einem herkömmlichen Videoplattenspieler ein Bild in bekannter Qualität liefert, dagegen bei einem Videoplattenspieler, der beide Signale - sowohl die mittels der Pits als auch die in der magneto-optischen Schicht gespeicherten Daten - auswertet, ein Bild hoher Qualität wiedergibt.

Auch bei einer CD-Platte läßt sich eine wesentliche Steigerung der Tonqualität erzielen, wenn in der magneto-optischen Schicht zu den in den Pitmustern gespeicherten Daten korrelierende Daten aufgezeichnet sind.

Ein weiterer Anwendungsfall ist z.B. eine Videoplatte, auf der Landkarten gespeichert sind. Nicht veränderliche Daten wie z.B. Berge, Höhenlinien oder Seen sind mittels der Pits gespeichert, dagegen werden veränderliche Daten, beispielsweise Umleitungen oder Baustellen, in der magnetischen Schicht gespeichert.

Der erfindungsgemäße optische Aufzeichnungsträger ist jedoch keineswegs auf die Scheibenform einer Platte beschränkt. Er kann z.B. auch als Trommel ausgeführt sein. In der Ausführung als Platte ist er besonders gut als Speichermedium für Computer, als Videoplatte für Videoplattenspieler und als CD-Platte für CD-Spieler geeignet.

Als Werkstoff für die lichtreflektierende magneto-optische Schicht 2 eignet sich z.B. eine Legierung aus Eisen, Terbium und Gadolinium.

Weil, wie bereits erwähnt, die Erfindung in der Ausführung als Platte eine Kombination aus einer nur lesbaren CD-Platte und einer sowohl lesals auch schreibbaren magneto-optischen Platte darstellt, vereinigt sie in sich die Eigenschaften einer ROM- und einer RAM-Disc und könnte deshalb als ROMRAM-Disc bezeichnet werden.

**Patentansprüche**

1. Optischer Aufzeichnungsträger mit einer lichtdurchlässigen Substratschicht (1), **dadurch gekennzeichnet**, daß auf die lichtdurchlässige Substratschicht (1) eine teils lichtreflektierende, teils lichtdurchlässige magneto-optische Schicht (2) folgt, in der Daten durch Magnetisieren speicherbar sind, daß auf die magneto-optische Schicht (2) eine lichtdurchlässige Schicht (10) folgt, an die sich eine lichtdurchlässige Schicht (11) anschließt, in der Daten mittels Vertiefungen, sogenannter Pits (3), speicherbar sind, und daß die in der magneto-optischen Schicht (2) gespeicherten Daten und die mittels der Pits gespeicherten Daten in derselben Datenspur übereinander liegen.

2. Optischer Aufzeichnungsträger mit einer lichtdurchlässigen Substratschicht (1), **dadurch gekennzeichnet**, daß auf die lichtdurchlässige Substratschicht (1) eine teils lichtreflektierende, teils lichtdurchlässige magneto-optische Schicht (2) folgt, in der Daten durch Magnetisieren speicherbar sind, daß auf die magneto-optische Schicht (2) eine lichtdurchlässige Schicht (10) folgt, in der Daten mittels Vertiefungen, sogenannter Pits (3), speicherbar sind, daß die Pits (3) an der Außenseite des Aufzeichnungsträgers vorgesehen sind, und daß die in der magneto-optischen Schicht (2) gespeicherten Daten und die mittels der Pits gespeicherten Daten in derselben Datenspur übereinander liegen.

3. Optischer Aufzeichnungsträger nach Anspruch 1, **gekennzeichnet** durch folgenden Schichtaufbau in der angegebenen Reihenfolge:
   a) eine lichtdurchlässige Substratschicht (1)
   b) eine erste Schutzschicht (8)
   c) eine magneto-optische Schicht (2)
   d) eine zweite Schutzschicht (9)
   e) eine lichtdurchlässige Schicht (10) mit einem Brechungsindex $n_1$
   f) eine lichtdurchlässige Schicht (11) mit einem Brechungsindex $n_2 \neq n_1$ und mit Vertiefungen (3), sogenannten Pits.

4. Optischer Aufzeichnungsträger nach Anspruch 1 oder 3, **dadurch gekennzeichnet**, daß die Tiefe der Vertiefungen (3) geringer gewählt ist als die Wellenlänge des abtastenden Lichts.

5. Optischer Aufzeichnungsträger nach Anspruch 4, **dadurch gekennzeichnet**, daß die Tiefe der Vertiefungen (3) etwa 1/10 der Wellenlänge des abtastenden Lichtes beträgt.

6. Optischer Aufzeichnungsträger nach Anspruch 1 oder 3, **dadurch gekennzeichnet**, daß die Tiefe der Vertiefungen (3) etwa die Hälfte oder ungeradzahlige Vielfache der Hälfte der Wellenlänge des abtastenden Lichtes beträgt.

7. Optischer Aufzeichnungsträger nach Anspruch 1 oder 3, **dadurch gekennzeichnet**, daß die Tiefe der Vertiefungen (3) etwa ein Viertel oder ungeradzahlige Vielfache eines Viertels der Wellenlänge des abtastenden Lichtes betragt.

8. Optischer Aufzeichnungsträger nach Anspruch 1, 3, 4, 5, 6 oder 7, **dadurch gekennzeichnet**, daß die Pits (3) an der Grenze zwischen zwei Schichten liegen.

9. Optischer Aufzeichnungsträger nach Anspruch 1, 2, 3, 4, 5, 6, 7 oder 8, **dadurch gekennzeichnet**, daß die in der magneto-optischen Schicht (2) gespeicherten Daten zu den mittels der Pits (3) gespeicherten Daten korrelierende Zusatzdaten sind.

10. Verfahren zum Lesen eines optischen Aufzeichnungsträgers nach Anspruch 6, **dadurch gekennzeichnet**, daß ein Teil des auf den Aufzeichnungsträger strahlenden und die Daten abtastenden Lichts von der magneco-optischen Schicht (2) reflektiert, ein Teil aber durch die magneto-optische Schicht (2) hindurchstrahlt, daß der reflektierte Teil des Lichts die magneto-optisch gespeicherten Daten enthält und daß der durch den Aufzeichnungsträger durchstrahlende Teil des Lichts die mittels der Pits (3) gespeicherten Daten enthält.

11. Verfahren zum Lesen eines optischen Aufzeichnungsträgers nach Anspruch 7, **dadurch gekennzeichnet**, daß ein Teil des auf den Aufzeichnungsträger strahlenden und die Daten abtastenden Lichts von der magneto-optischen Schicht (2) reflektiert, ein Teil aber durch die magneto-optische Schicht (2) hindurchstrahlt, daß der reflektierte Teil des Lichts die mittels der Pits (3) gespeicherten Daten enthält und daß der durch den Aufzeichnungsträger durchstrahlende Teil des Lichts die magneto-optisch gespeicherten Daten enthält.

12. Verfahren zur Herstellung eines optischen Aufzeichnungsträgers, **dadurch gekennzeichnet**, daß auf eine lichtdurchlässige Substratschicht (1) eine magneto-optische Schicht (2) aufgebracht wird, an die sich eine lichtdurchlässige Schicht (10) anschließt, die von einem Photolack (14) überzogen ist, auf dem durch Belichten das Pitmuster abgebildet wird, daß der Photolack (14) entwickelt wird, wobei die belichteten bzw. die nicht belichteten Stellen des Photolacks (14) von der Lichtdurchlässigen Schicht (10) gelöst werden, daß die frei liegenden Stellen der lichtdurchlässigen Schicht (10) weggeätzt werden und daß in einem letzten Verfahrensschritt der restliche Photolack (14) von der lichtdurchlässigen Schicht (10) gelöst wird.

**Claims**

1. Optical recording medium with a transparent (light-permeable) substrate layer (1), **characterized in that** the transparent substrate layer (1) is followed by a magneto-optical layer (2) which is partially reflective to light and partially transparent and in which data can be stored by means of magnetising, that the magneto-optical layer (2) is followed by a transparent layer (10) which is followed by a transparent layer (11) in which data can be stored by means of recesses, so-called pits (3), and that the data stored in the magneto-optical layer (2) and the data stored by means of the pits lie one above the other in the same data track.

2. Optical recording medium with a transparent substrate layer (1), **characterized in that** the transparent substrate layer (1) is followed by a magneto-optical layer (2) which is partially reflective to light and partially transparent and in which data can be stored by means of magnetising, that the magneto-optical layer (2) is followed by a transparent layer (10) in which data can be stored by means of recesses, so-called pits (3), that the pits (3) are provided on the outer side of the recording medium, and that the data stored in the magneto-optical layer (2) and the data stored by means of the pits lie one above the other in the same data track.

3. Optical recording medium according to claim 1, **characterized in** by the following construction of layers in the specified sequence:
   a) a transparent substrate layer (1)
   b) a first protective layer (8)
   c) a magneto-optical layer (2)
   d) a second protective layer (9)
   e) a transparent layer (10) with a refractive index of $n_1$
   f) a transparent layer (11) with a refractive index of $n_2 \neq n_1$ and with recesses (3), so-called pits.

4. Optical recording medium according to claim 1 or 3, **characterized in that** the depth of the recesses (3) is chosen to be smaller than the wavelength of the scanning light.

5. Optical recording medium according to claim 4, **characterized in that** the depth of the recesses (3) is about 1/10 of the wavelength of the scanning light.

6. Optical recording medium according to claim 1 or 3, **characterized in that** the depth of the recesses (3) is about one-half or odd number multiples of one-half of the wavelength of the scanning light.

7. Optical recording medium according to claim 1 or 3, **characterized in that** the depth of the recesses (3) is about one-quarter or odd number multiples of one-quarter of the wavelength of the scanning light.

8. Optical recording medium according to claim 1, 3, 4, 5, 6 or 7, **characterized in that** the pits (3) lie at the border between two layers.

9. Optical recording medium according to claim 1, 2, 3, 4, 5, 6, 7 or 8, **characterized in that** the data stored in the magneto-optical layer (2) are auxiliary (additional) data correlated to the data stored by means of the pits (3).

10. Method for reading an optical recording medium according to claim 6, **characterized in that** one part of the light radiating onto the recording medium and scanning the data is reflected by the magneto-optical layer (2), while one part, however, radiates through the magneto-optical layer (2), that the reflected part of the light contains the magneto-optically stored data and that the part of the light radiating through the recording medium contains the data stored by means of the pits (3).

11. Method for reading an optical recording medium according to claim 7, **characterized in that** one part of the light radiating onto the recording medium and scanning the data is reflected by the magneto-optical layer (2), while one part, however, radiates through the magneto-optical layer (2), that the reflected part of the light contains the data stored by means of the pits (3) and that the part of the light radiating through the recording medium contains the magneto-optically stored data.

12. Method for manufacturing an optical recording medium, **characterized in that** a magneto-optical layer (2) is deposited onto a transparent substrate layer (1), said magneto-optical layer being followed by a transparent layer (10) which is coated with a photosensitive resist (14) onto which the pattern of pits is depicted by means of exposing, that the photosensitive resist (14) is developed whereby the exposed or, respectively, the non-exposed areas of the photosensitive resist (14) are stripped from the transparent layer (10), that the bare areas of the transparent layer (10) are etched away and that in a final procedure step the remaining photosensitive resist (14) is stripped from the transparent layer (10).

**Revendications**

1. Support d'enregistrement optique avec une couche de substrat perméable à la lumière (1), **caractérisé en ce** qu'une couche magnéto-optique (2) qui réfléchit partiellement la lumière et qui est partiellement perméable à la lumière suit la couche de substrat perméable à la lumière (1), couche magnéto-optique dans laquelle des données peuvent être mémorisées par magnétisation, qu'une couche perméable à la lumière (10) suit la couche magnéto-optique (2), couche perméable à la lumière qui est suivie par une couche perméable à la lumière (11) dans laquelle des données peuvent être mémorisées au moyen de creux, de ce qu'il est convenu d'appeler des "pits" (3) et que les données mémorisées dans la couche magnéto-optique (2) et les données mémorisées au moyen des creux sont superposées dans la même piste de données.

2. Support d'enregistrement optique avec une couche de substrat perméable à la lumière (1), **caractérisé en ce** qu'une couche magnéto-optique (2) qui réfléchit partiellement la lumière et qui est partiellement perméable à la lumière suit la couche de substrat perméable à la lumière (1), couche magnéto-optique dans laquelle des données peuvent être mémorisées par magnétisation, qu'une couche perméable à la lumière (10) suit la couche magnéto-optique (2), couche perméable à la lumière dans laquelle des données peuvent être mémorisées au moyen de creux, de ce qu'il est convenu d'appeler des "pits" (3), que les creux (3) sont prévus sur la face extérieure du support d'enregistrement et que les données mémorisées dans la couche magnéto-optique (2) et les données mémorisées au moyen des creux sont superposées dans la même piste de données.

3. Support d'enregistrement optique selon la revendication 1, **caractérisé** par la structure de couches suivantes dans l'ordre indiqué :
   a) une couche de substrat perméable à la lumière (1)
   b) une première couche de protection (8)
   c) une couche magnéto-optique (2)
   d) une seconde couche de protection (9)
   e) une couche perméable à la lumière (10) avec un indice de réfraction $n_1$
   f) une couche perméable à la lumière (11) avec un indice de réfraction $n_2 \neq n_1$ et avec des creux (3), ce qu'il est convenu d'appeler des "pits".

4. Support d'enregistrement optique selon la revendication 1 ou 3, **caractérisé en ce** que la profondeur des creux (3) est choisie plus faible que la longueur d'onde de la lumière qui explore.

5. Support d'enregistrement optique selon la revendication 4, **caractérisé en ce** que la profondeur des creux (3) est d'environ 3/10 de la longueur d'onde de la lumière qui explore.

6. Support d'enregistrement optique selon la revendication 1 ou 3, **caractérisé en ce** que la profondeur des creux (3) n'est que d'environ la moitié ou des multiples impairs de la moitié de la longueur d'onde de la lumière qui explore.

7. Support d'enregistrement optique selon la revendication 1 ou 3, **caractérisé en ce** que la profondeur des creux (3) n'est que d'environ un quart ou des multiples impairs d'un quart de la longueur d'onde de la lumière qui explore.

8. Support d'enregistrement optique selon la revendication 1, 3, 4, 5, 6 ou 7, **caractérisé en ce** que les creux (3) se trouvent à la limite entre deux couches.

9. Support d'enregistrement optique selon la revendication 1, 2, 3, 4, 5, 6, 7 ou 8, **caractérisé en ce** que les données mémorisées dans la couche magnéto-optique (2) sont des données supplémentaires mises en corrélation avec les données mémorisées au moyen des creux (3).

10. Procédé pour lire un support d'enregistrement optique selon la revendication 6, **caractérisé en ce** qu'une partie de la lumière qui rayonne sur le support d'enregistrement et qui explore les données est réfléchie par la couche magnéto-optique (2), mais qu'une partie traverse la couche magnéto-optique (2), que la partie de la lumière qui est réfléchie contient les données mémorisées de manière magnéto-optique et que la partie de la lumière qui traverse le support d'enregistrement contient les données mémorisées au moyen des creux (3).

11. Procédé pour lire un support d'enregistrement optique selon la revendication 7, **caractérisé en ce** qu'une partie de la lumière qui rayonne sur le support d'enregistrement et qui explore les données est réfléchie par la couche magnéto-optique (2), mais qu'une partie traverse la couche magnéto-optique (2), que la partie de la lumière qui est réfléchie contient les données mémorisées au moyen des creux et que la partie de la lumière qui traverse le support d'enregistrement contient les données mémorisées de manière magnéto-optique.

12. Procédé pour la fabrication d'un support d'enregistrement ooptique, **caractérisé en ce** qu'une couche magnéto-optique (2) est appliquée sur une couche de substrat perméable à la lumière (1), couche magnéto-optique qui est suivie par une couche perméable à la lumière (10) qui est recouverte par une laque photosensible (14) sur laquelle le dessin des creux est représenté par exposition, que la laque photosensible (14) est développée, les endroits exposés ou non exposés de la laque photosensible (14) étant dissous par la couche perméable à la lumière (10), que les endroits à nu de la couche perméable à la lumière (10) sont enlevés par gravure (10) et que le reste de la laque photosensible (14) est dissous dans la dernière étape de procédé par la couche perméable à la lumière (10).

**Figur 1**

**Figur 2**

EP 0 309 721 B1

Figur 3

Figur 4

14
10
2
1

λ/4

5a

belichtet
und
entwickelt

14
10
2
1

5b

geätzt

14
10
2
1

5c

10
2
1

3

fertig

5d

Figur 5